# EUROPÄISCHE PATENTSCHRIFT

(11) **EP 3 764 073 B1**
(45) Veröffentlichungstag und Bekanntmachung des Hinweises auf die Patenterteilung: **11.02.2026**
(21) Anmeldenummer: 20181433.2
(22) Anmeldetag: 22.06.2020
(51) Int. Cl.: G01M 3/24, G01N 29/02

(54) **VERFAHREN UND VORRICHTUNG ZUR FESTSTELLUNG UND BEWERTUNG VON BLASEN IN EINER FLÜSSIGKEIT IN EINEM KREISLAUF, INSBESONDERE BEI EINEM WÄRMEPUMPENSYSTEM**
METHOD AND DEVICE FOR DETECTING AND EVALUATING BUBBLES IN A LIQUID IN A CIRCUIT, ESPECIALLY IN A HEAT PUMP SYSTEM
PROCÉDÉ ET DISPOSITIF DE DÉTECTION ET D'ÉVALUATION DES BULLES DANS UN LIQUIDE DANS UN CIRCUIT, EN PARTICULIER DANS UN SYSTÈME DE POMPE À CHALEUR

(30) Priorität: 12.07.2019 DE 102019118909
(43) Veröffentlichungstag der Anmeldung: 13.01.2021
(73) Patentinhaber: Vaillant GmbH, 42859 Remscheid (DE)
(72) Erfinder: Lebernegg, Martin, 42855 Remscheid (DE)
(74) Vertreter: Popp, Carsten

(56) Entgegenhaltungen:
- EP-A1- 3 376 139
- WO-A1-01/92867
- WO-A1-97/14943
- JP-A- H0 311 955

## Beschreibung

Die Erfindung liegt auf dem Gebiet der Wärmepumpensysteme, die insbesondere zur Beheizung oder Kühlung von Wohngebäuden und/oder zur Warmwasserbereitung benutzt werden. Solche Wärmepumpensysteme benötigen zwei oder mehr Kreisläufe, von denen mindestens ein erster ein geschlossener Kreislauf ist, der zumindest zum Teil im Inneren eines Gebäudes liegt und typischerweise im Wesentlichen mit Wasser oder Sole als Wärmeträgermedium betrieben wird. Über einen Wärmetauscher findet ein Wärmeaustausch mit einem zweiten Kreislauf statt, der typischerweise mit einem Kältemittel betrieben wird. Bevorzugt werden natürliche Kältemittel eingesetzt, wobei es sich um brennbare Stoffe handeln kann. Ein solches Kältemittel ist beispielsweise unter der Bezeichnung R290 bekannt. Häufig werden Alkane, zu denen beispielsweise auch Propan gehört, als Kältemittel eingesetzt, da sie geeignete Eigenschaften z. B. bezüglich der Abhängigkeit ihrer Siedetemperatur vom Druck und der Verdampfungswärme haben. Es können natürliche und künstliche Kältemittel eingesetzt werden, wobei hier natürliche und brennbare Kältemittel im Vordergrund stehen, insbesondere R290.

Bei Wärmetauschern zwischen verschiedenen Wärmeträgermedien, die möglicherweise auch noch mit unterschiedlichen Drücken vorliegen, ist es besonders wichtig, eventuelle Leckagen feststellen zu können. Insbesondere im Fall von Wärmepumpensystemen ist es wünschenswert, frühzeitig auch geringe Leckagen feststellen zu können, insbesondere wenn es sich um das Eindringen von brennbarem Kältemittel in einen geschlossenen Kreislauf (mit z. B. Wasser oder Sole als Wärmeträgermedium), der auch im Inneren eines Gebäudes verläuft, handelt. Selbst geschlossene Kreisläufe sind nicht immer vollständig gasdicht gegenüber ihrer Umgebung oder weisen sogar Entgasungseinrichtungen auf. Da das Eindringen von brennbaren Gasen in Gebäude aus Sicherheitsgründen grundsätzlich vermieden werden soll, ist es wichtig, das unerwünschte Eindringen von Kältemittel aus einem zweiten Kreislauf in einen ersten Kreislauf feststellen zu können.

Nach dem Stand der Technik gibt es verschiedene chemische oder physikalische Verfahren, Leckagen in einem Wärmetauscher und/oder das Eindringen von Fremdstoffen in einen geschlossenen Kreislauf festzustellen, die jedoch teilweise sehr aufwändig und/oder langsam und/oder unzuverlässig sind. Aus der WO 01/92867 A1 ist beispielsweise auch die Detektion von Blasen in einer Flüssigkeit mittels Ultraschallsensor bekannt und aus der JP H03 11955 A die Detektion von Wasserstoffblasen in Wasser mittels optischer Sensoren.

Grundsätzlich können Verluste an Kältemittel in einem geschlossenen Kreislauf detektiert werden, wie beispielsweise in der EP 3 376 139 A1 beschrieben, nach der mittels eines Ultraschallsensors unerwartet auftretende Blasen im Kältemittelkreislauf detektiert werden, jedoch sind relativ geringe Verluste zunächst nicht leicht messbar, insbesondere in einem Kältekreislauf, in dem das Kältemittel teilweise flüssig und teilweise gasförmig vorliegt. Passive Maßnahmen, wie z. b. doppelwandige Wärmetauscher, erhöhen die Sicherheit, sind jedoch aufwändig und verringern die Effizienz der Wärmeübertragung. Automatikentlüfter können zwar eventuell eindringendes Kältemittel teilweise abführen, allerdings nicht in beliebiger Menge pro Zeiteinheit, und sie können keinen Alarm oder eine Abschaltung auslösen.

Aufgabe der vorliegenden Erfindung ist es, ein Verfahren und eine Vorrichtung zu schaffen, die eine kostengünstige, schnelle und zuverlässige Feststellung von Blasen in einem flüssigen Wärmeträgermedium ermöglichen und das Eindringen von brennbarem Kältemittel in einen Wasser- oder Solekreislauf schnell erkennen und Sicherheitsmaßnahmen auslösen können.

Zur Lösung dieser Aufgabe dienen ein Verfahren, eine Vorrichtung sowie ein Computerprogrammprodukt gemäß den unabhängigen Ansprüchen. Vorteilhafte Ausgestaltungen und Weiterbildungen der Erfindung sind in den jeweiligen abhängigen Ansprüchen angegeben. Die Beschreibung, insbesondere im Zusammenhang mit den Figuren, veranschaulicht die Erfindung und gibt weitere Ausführungsbeispiele an.

Die Erfindung schafft ein Verfahren zur Feststellung des Vorhandenseins von Gasblasen eines gasförmigen brennbaren Kältemittels eines Wärmepumpensystems zur Beheizung oder Kühlung von Wohngebäuden und/oder zur Warmwasserbereitung in einer Flüssigkeit, nämlich im Wesentlichen Wasser oder Sole, eines ersten geschlossenen Kreislaufes des Wärmepumpensystems mittels mindestens eines Ultraschallsensors, wobei der Ultraschallsensor stromabwärts und von der Höhe oberhalb eines Wärmetauschers, der bei Leckagen Gasblasen des Kältemittels in die Flüssigkeit einblasen kann, angeordnet wird, wobei sich ein erster automatischer Entlüfter stromabwärts und von der Höhe noch weiter oberhalb des Ultraschallsensors befindet und wobei der Ultraschallsensor zur Erkennung von Blasen geeignete Ultraschallsignale aussendet, empfängt und an eine Auswerteeinheit weiterleitet. Der Ultraschallsensor kann auch parallel in an sich bekannter Weise als Durchflussmesser fungieren, so dass der zusätzliche apparative Aufwand für die vorliegende Erfindung sehr gering ist. Mittels Ultraschall können Gasblasen gut detektiert werden. Bei einer Anordnung stromabwärts hinter dem Wärmetauscher in einem Abstand, in dem sich Blasen jedenfalls noch nicht vollständig in der Flüssigkeit gelöst haben können, ist daher ein sicherer Nachweis einer Leckage im Wärmetauscher möglich.

Die Signale des Ultraschallsensors werden im Normalbetrieb zusätzlich zur Messung des Durchflusses an Flüssigkeit pro Zeiteinheit am Ultraschallsensor ausgewertet, wobei je nach Sensortyp eine gleichzeitige oder wechselweise Messung möglich ist.

Der Wärmetauscher gehört zu einem Wärmepumpensystem und bewirkt einen Wärmeaustausch zwischen einem brennbaren Kältemittel und der Flüssigkeit im ersten geschlossenen Kreislauf, wobei der Ultraschallsensor in einem Abstand von 10 bis 200 cm (Zentimeter) vom Wärmetauscher angeordnet wird. Der Abstand muss einen für eine einfache Montage sinnvollen Wert haben, aber darf nicht so groß sein, dass sich Blasen schon ganz oder teilweise aufgelöst haben, bevor sie den Ultraschallsensor erreichen.

In einer Ausführungsform des Verfahrens wird das Wärmepumpensystem bei Auftreten von Gasblasen oberhalb vorgebbarer Grenzbedingungen abgeschaltet. Die Grenzbedingungen können je nach Anlage und Betriebsart vorgegeben werden, insbesondere kann ein Unterschied nach der Größe und/oder Anzahl oder zwischen dem kurzzeitigen Auftreten von Blasen und dem dauerhaften Auftreten gemacht werden.

Wichtig ist auch, nicht Fehlalarme oder Abschaltungen nur wegen des vorübergehenden Auftretens von Luftblasen auszulösen. Zur Vermeidung des Auftretens von im ersten Kreislauf umlaufenden Luftblasen am Ultraschallsensor wird daher bevorzugt ein zweiter automatischer Entlüfter stromaufwärts vom Wärmetauscher angeordnet ist.

Die Erfindung betrifft auch eine Vorrichtung zur Feststellung des Vorhandenseins von Gasblasen in einer Flüssigkeit eines ersten geschlossenen Kreislaufes, wobei der erste Kreislauf einen Wärmetauscher zum Wärmeaustausch mit einem zweiten Kreislauf, der mit einem Kältemittel betrieben wird, aufweist, wobei weiter in dem ersten Kreislauf stromabwärts aber in der Höhe oberhalb des Wärmetauschers mindestens ein Ultraschallsensor und weiter stromabwärts und von der Höhe noch höher ein automatischer Entlüfter angeordnet sind und wobei der Ultraschallsensor mit einer Auswerteeinheit zur Erkennung von Blasen anhand von Ultraschallsignalen verbunden ist.

Bevorzugt ist der Ultraschallsensor in Verbindung mit der Auswerteeinheit auch als Durchflussmesser ausgebildet, wodurch der apparative Aufwand insgesamt klein bleibt.

Bei einer weiteren Ausführungsform weist der erste geschlossene Kreislauf einen zweiten automatischen Entlüfter stromaufwärts von dem Wärmetauscher auf, wodurch Luftblasen aus dem Kreislauf (die bei bestimmten Vorgängen entstehen können) entfernt werden, bevor sie den Ultraschallsensor erreichen.

Bei einer bevorzugten Anwendung ist die Flüssigkeit im ersten geschlossenen Kreislauf im Wesentlichen Wasser, das Kältemittel im zweiten Kreislauf im Wesentlichen ein brennbares Kältemittel. Bei dieser Kombination ist es besonders wichtig, Leckagen schnell feststellen zu können, um Risiken zu Minimieren.

Die Erfindung betrifft auch ein Computerprogrammprodukt, umfassend Befehle, die bewirken, dass die beschriebene Vorrichtung das erfindungsgemäße Verfahren ausführt.

Ein schematisches Ausführungsbeispiel der Erfindung, auf das diese jedoch nicht beschränkt ist, und die Funktionsweise des erfindungsgemäßen Verfahrens werden nun anhand der Zeichnung detailliert erläutert. Es zeigt:

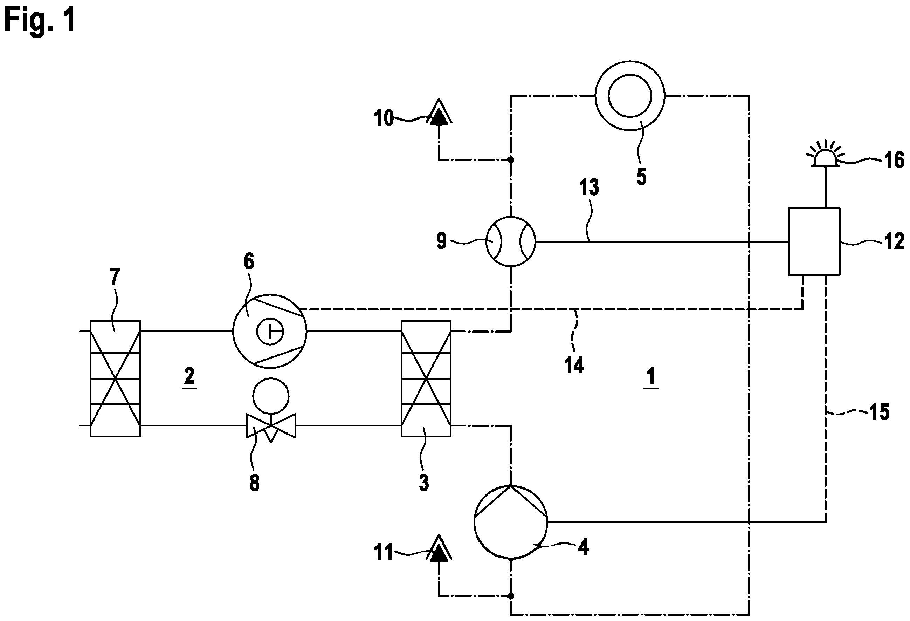

- Fig. 1:: schematisch eine Messanordnung gemäß der vorliegenden Erfindung als Teil eines geschlossenen Flüssigkeitskreislaufs.

Figur 1 zeigt schematisch ein Ausführungsbeispiel einer hier vorgeschlagenen Vorrichtung. Ein erster geschlossener Flüssigkeitskreislauf 1, der Teil eines Wärmepumpensystems ist, ist gefüllt mit einer Flüssigkeit als Wärmeträgermedium, vorzugsweise mit Wasser oder Sole. Eine Umwälzpumpe 4 treibt die Flüssigkeit an, so dass diese z. B. zu einzelnen Heizkreisläufen 5 gelangen kann. Der erste Flüssigkeitskreislauf 1 steht über einen Wärmetauscher 3 mit einem zweiten Kreislauf 2 in Verbindung, in dem ein Kältemittel zirkuliert. Dieses wird im Betrieb von einem Kompressor 6 komprimiert, tauscht Wärme im Wärmetauscher 3 mit dem ersten Kreislauf 1, wird dann in einem Drosselventil 8 wieder entspannt und tauscht typischerweise dann wieder Wärme in einem weiteren Wärmetauscher 7. Bei dem Kältemittel kann es sich insbesondere um ein natürliches Kältemittel handeln, welches typischerweise brennbar sein kann. Als Kältemittel bekannt ist beispielsweise für Wärmepumpenanlagen ein als R290 bezeichneter Stoff. Im Allgemeinen werden Alkane, zu denen beispielsweise auch Propan gehört, als Kältemittel eingesetzt. In dem Wärmetauscher 3 steht das Kältemittel im Normalbetrieb unter höherem Druck als die Flüssigkeit im ersten Kreislauf 1, so dass bei einer eventuellen Leckage Kältemittel in den ersten Kreislauf 1 übertreten kann. Dies führt, jedenfalls bei signifikanten Leckagen zum Auftreten von Gasblasen (aus Kältemittel) im ersten Kreislauf. Da Kältemittel, jedenfalls wenn es brennbar ist, im ersten Kreislauf 1 ein Sicherheitsproblem darstellen kann, sollen solche Gasblasen schnell und zuverlässig erkannt werden. Dazu dient ein Ultraschallsensor 9, der Ultraschallsignale in die Flüssigkeit sendet und Echos aus der Flüssigkeit empfängt. Solche Ultraschallsensoren 9 werden schon bisher als Durchflussmesser eingesetzt und können beispielsweise dazu dienen, bestimmte Mindestdurchflüsse bei bestimmten Betriebssituationen (z. B. Abtauen des Wärmetauschers) sicherzustellen. An der Art und/oder Intensität der Echos kann eine Auswerteeinheit 12, mit der der Ultraschallsensor 9 über eine Signalleitung 13 in Verbindung steht, auch das Vorhandensein von Blasen und möglicherweise auch deren Größe und Häufigkeit erkennen. Der Ultraschallsensor 9 kann daher bevorzugt eine Doppelfunktion als Durchflussmesser und Blasendetektor übernehmen. Bei Überschreiten vorgebbarer Bedingungen (z. B. Menge, Größe der Blasen oder Dauer des Auftretens) kann dann eine Abschaltung des Kompressors 6 über eine Kompressorabschaltleitung 14 und/oder der Umwälzpumpe 4 über eine Umwälzpumpenabschaltleitung 15 ausgelöst werden. Alternativ oder parallel kann ein Alarmgeber 16 betätigt werden, der optisch, akustisch und/oder über Kommunikationsmittel (Funk, WLAN, Bluetooth etc.) einen Alarm auslöst. So können gefährliche Konzentrationen insbesondere von brennbarem Kältemittel in dem ersten Kreislauf 1 vermieden bzw. schnell signalisiert werden. Dazu ist es wichtig, dass der Ultraschallsensor 9 in Strömungsrichtung kurz hinter dem Wärmetauscher 3 und etwas höher als dieser angeordnet ist. Auf diese Weise gelangen eventuelle Blasen aus dem Wärmetauscher 3 ohne sich vorher in der Flüssigkeit zu lösen sicher zu dem Ultraschallsensor 9. Die Entfernung vom Wärmetauscher 3 sollte daher zwischen 10 und 200 cm liegen, insbesondere zwischen 50 und 100 cm. Bevorzugt sollte eine Leitung zwischen dem Wärmetauscher 3 und dem Ultraschallsensor 9 kontinuierlich ansteigen, damit sich nicht zwischendurch Blasen irgendwo ansammeln können. Stromabwärts des Ultraschallsensors 9 und möglichst noch etwas höher (wiederum bevorzugt mit kontinuierlich ansteigender Leitung) ist ein automatischer Entlüfter 10 angeordnet, der jedenfalls in geringer Menge auftretende Blasen aus der Flüssigkeit entfernen kann. Falls durch ein einmaliges Ereignis (Inbetriebnahme, Kontrollvorgänge etc.) Kältemittel in den ersten Kreislauf gelangt, so wird es dort entfernt und in der Folge treten bei weiteren Umläufen der Flüssigkeit keine Blasen mehr auf. So kann ein Fehlalarm oder gar eine Abschaltung vermieden werden. Insbesondere nach einer Neubefüllung mit Wasser, aber auch bei bestimmten Betriebszuständen können allerdings Luftblasen in dem ersten Kreislauf auftreten, die an sich kein Sicherheitsrisiko bedeuten. Damit diese nicht zu Fehlalarmen führen, kann ein zweiter automatischer Abscheider 11 stromaufwärts von dem Wärmetauscher 3, insbesondere vor der Umwälzpumpe 4 (dort herrscht der geringste Druck) vorgesehen werden. Wenn vor dem Wärmetauscher 3 praktisch alle Luftblasen abgeschieden werden, kann man relativ sicher sein, dass hinter dem Wärmetauscher 3 festgestellte Blasen aus Kältemittel bestehen, was als sicherheitsrelevant einzustufen ist.

Die vorliegende Erfindung erlaubt es, in einem Wärmepumpensystem sicher zu detektieren, wenn Kältemittel, insbesondere brennbares Kältemittel, in einen geschlossenen Kreislauf in einem Gebäude gelangt, wo dies aus Sicherheitsgründen nicht vorhanden sein soll, und Sicherheitsmaßnahmen frühzeitig einzuleiten. Dabei können aber Fehlalarme durch im Kreislauf vorhandene Luftblasen weitgehend vermieden werden.

### Bezugszeichenliste

- 1: erster geschlossener Kreislauf
- 2: zweiter Kreislauf
- 3: Wärmetauscher
- 4: Umwälzpumpe
- 5: einzelne Heizkreisläufe
- 6: Kompressor
- 7: weiterer Wärmetauscher
- 8: Drosselventil
- 9: Ultraschallsensor
- 10: erster automatischer Entlüfter
- 11: zweiter automatischer Entlüfter
- 12: Auswerteeinheit
- 13: Signalleitung
- 14: Kompressorabschaltleitung
- 15: Umwälzpumpenabschaltleitung
- 16: Alarmgeber

## Patentansprüche

1. Verfahren zur sicheren Feststellung des Vorhandenseins von Gasblasen eines gasförmigen brennbaren Kältemittels eines Wärmepumpensystems zur Beheizung oder Kühlung von Wohngebäuden und/oder zur Warmwasserbereitung in einer Flüssigkeit, nämlich im Wesentlichen Wasser oder Sole, eines ersten geschlossenen Kreislaufes (1) des Wärmepumpensystems mittels mindestens eines Ultraschallsensors (9), wobei der Ultraschallsensor (9) stromabwärts und von der Höhe oberhalb eines Wärmetauschers (3), der bei Leckagen Gasblasen des Kältemittels in die Flüssigkeit einblasen kann, angeordnet wird, wobei sich ein erster automatischer Entlüfter (10) stromabwärts und von der Höhe noch weiter oberhalb des Ultraschallsensors (9) befindet und wobei der Ultraschallsensor (9) zur Erkennung von Blasen geeignete Ultraschallsignale aussendet, empfängt und an eine Auswerteeinheit (12) weiterleitet.

2. Verfahren nach Anspruch 1, wobei die Signale des Ultraschallsensors (9) im Normalbetrieb zusätzlich zur Messung des Durchflusses an Flüssigkeit pro Zeiteinheit am Ultraschallsensor (9) ausgewertet werden.

3. Verfahren nach Anspruch 1 oder 2, wobei der Wärmetauscher (3) zu einem Wärmepumpensystem (3, 6, 7, 8) gehört und einen Wärmeaustausch zwischen dem brennbaren Kältemittel und der Flüssigkeit im ersten geschlossenen Kreislauf (1) bewirkt und wobei der Ultraschallsensor (9) in einem Abstand von 10 bis 200 cm (Zentimeter) vom Wärmetauscher angeordnet wird.

4. Verfahren nach einem der vorhergehenden Ansprüche, wobei das Wärmepumpensystem (3, 6, 7, 8) bei Auftreten von Gasblasen oberhalb vorgebbarer Grenzbedingungen abgeschaltet wird.

5. Verfahren nach einem der vorhergehenden Ansprüche, wobei zur Vermeidung des Auftretens von im ersten Kreislauf umlaufenden Luftblasen am Ultraschallsensor (9) ein zweiter automatischer Entlüfter (11) stromaufwärts vom Wärmetauscher (3) angeordnet ist.

6. Vorrichtung, umfassend mindestens einen Ultraschallsensor und eine Auswerteeinheit, zur sicheren Feststellung des Vorhandenseins von Gasblasen eines gasförmigen brennbaren Kältemittels eines Wärmepumpensystems zur Beheizung oder Kühlung von Wohngebäuden und/oder zur Warmwasserbereitung in einer Flüssigkeit, nämlich im Wesentlichen Wasser oder Sole, eines ersten geschlossenen Kreislaufes (1) des Wärmepumpensystems, wobei der erste Kreislauf (1) einen Wärmetauscher (3) zum Wärmeaustausch mit einem zweiten Kreislauf (2), der mit dem Kältemittel betrieben wird, aufweist, wobei weiter in dem ersten Kreislauf (1) stromabwärts aber in der Höhe oberhalb des Wärmetauschers (3) der mindestens eine Ultraschallsensor (9) und weiter stromabwärts und von der Höhe noch höher ein automatischer Entlüfter (10) angeordnet sind und wobei der Ultraschallsensor (9) mit der Auswerteeinheit (12) zur Erkennung von Blasen anhand von Ultraschallsignalen verbunden ist, die so angepasst ist, dass sie die Schritte des Verfahrens nach den Ansprüchen 1 bis 5 ausführt.

7. Vorrichtung nach Anspruch 6, wobei der Ultraschallsensor (9) in Verbindung mit der Auswerteeinheit (12) auch als Durchflussmesser ausgebildet ist.

8. Vorrichtung nach einem der Ansprüche 6 oder 7, wobei der erste geschlossene Kreislauf (1) einen zweiten automatischen Entlüfter (11) stromaufwärts von dem Wärmetauscher (3) aufweist.

9. Vorrichtung nach einem der Ansprüche 6 bis 8, wobei die Flüssigkeit im ersten geschlossenen Kreislauf (1) im Wesentlichen Wasser ist, das Kältemittel im zweiten Kreislauf (2) im Wesentlichen ein brennbares Kältemittel.

10. Computerprogrammprodukt, umfassend Befehle, die bewirken, dass die Vorrichtung nach Anspruch 6 das Verfahren nach Anspruch 1 ausführt.

## Claims

1. Method for reliably detecting the presence of gas bubbles of a gaseous combustible refrigerant of a heat pump system for heating or cooling residential buildings and/or for hot water preparation in a liquid, namely essentially water or brine, of a first closed circuit (1) of the heat pump system by means of at least one ultrasonic sensor (9), wherein the ultrasonic sensor (9) is arranged downstream and at a height above a heat exchanger (3) which, in the event of leaks, can blow gas bubbles of the refrigerant into the liquid, wherein a first automatic air vent (10) is arranged downstream and at a height even further above the ultrasonic sensor (9) , and wherein the ultrasonic sensor (9) transmits and receives ultrasonic signals suitable for detecting bubbles and forwards them to an evaluation unit (12) .

2. Method according to claim 1, wherein the signals from the ultrasonic sensor (9) are additionally evaluated during normal operation at the ultrasonic sensor (9) to measure the flow of liquid per unit of time.

3. Method according to claim 1 or 2, wherein the heat exchanger (3) belongs to a heat pump system (3, 6, 7, 8) and causes heat exchange between the combustible refrigerant and the liquid in the first closed circuit (1), and wherein the ultrasonic sensor (9) is arranged at a distance of 10 to 200 cm (centimetres) from the heat exchanger.

4. Method according to one of the preceding claims, wherein the heat pump system (3, 6, 7, 8) is switched off when gas bubbles occur above predeterminable limit conditions.

5. Method according to one of the preceding claims, wherein a second automatic air vent (11) is arranged upstream of the heat exchanger (3) at the ultrasonic sensor (9) in order to prevent the occurrence of air bubbles circulating in the first circuit.

6. Device comprising at least one ultrasonic sensor and an evaluation unit for reliably detecting the presence of gas bubbles of a gaseous combustible refrigerant of a heat pump system for heating or cooling residential buildings and/or for hot water preparation in a liquid, namely essentially water or brine, of a first closed circuit (1) of the heat pump system, wherein the first circuit (1) has a heat exchanger (3) for heat exchange with a second circuit (2) operated with the refrigerant. (1) of the heat pump system, wherein the first circuit (1) has a heat exchanger (3) for heat exchange with a second circuit (2) operated with the refrigerant, wherein further downstream in the first circuit (1) but at a height above the heat exchanger (3) at least one ultrasonic sensor (9) and, further downstream and at an even higher level, an automatic air vent (10) are arranged, and wherein the ultrasonic sensor (9) is connected to the evaluation unit (12) for detecting bubbles on the basis of ultrasonic signals, which is adapted to carry out the steps of the method according to claims 1 to 5.

7. Device according to claim 6, wherein the ultrasonic sensor (9) in conjunction with the evaluation unit (12) is also designed as a flow meter.

8. Device according to one of claims 6 or 7, wherein the first closed circuit (1) has a second automatic air vent (11) upstream of the heat exchanger (3).

9. Device according to one of claims 6 to 8, wherein the liquid in the first closed circuit (1) is essentially water, and the refrigerant in the second circuit (2) is essentially a flammable refrigerant.

10. Computer program product comprising instructions causing the device according to claim 6 to perform the method according to claim 1.

## Revendications

1. Procédé de détection sûre de la présence de bulles de gaz d'un réfrigérant combustible gazeux d'un système de pompe à chaleur pour le chauffage ou le refroidissement de bâtiments résidentiels et/ou pour la préparation d'eau chaude dans un liquide, à savoir sensiblement de l'eau ou de la saumure, d'un premier circuit (1) fermé du système de pompe à chaleur au moyen d'au moins un capteur à ultrasons (9), dans lequel le capteur à ultrasons (9) est agencé en aval et en hauteur au-dessus d'un échangeur de chaleur (3) qui peut insuffler en cas de fuites des bulles de gaz du réfrigérant dans le liquide, dans lequel un premier ventilateur automatique (10) se trouve en aval et en hauteur encore plus au-dessus du capteur à ultrasons (9) et dans lequel le capteur à ultrasons (9) émet, reçoit des signaux d'ultrasons appropriés à la détection de bulles et les transmet à une unité d'évaluation (12).

2. Procédé selon la revendication 1, dans lequel les signaux du capteurs à ultrasons (9) sont évalués en mode normal outre la mesure du débit de liquide par unité de temps au niveau du capteur à ultrasons (9).

3. Procédé selon la revendication 1 ou 2, dans lequel l'échangeur de chaleur (3) appartient à un système de pompe à chaleur (3, 6, 7, 8) et provoque un échange de chaleur entre le réfrigérant combustible et le liquide dans le premier circuit fermé (1) et dans lequel le capteur à ultrasons (9) est agencé à une distance de 10 à 200 cm (centimètre) de l'échangeur de chaleur.

4. Procédé selon l'une quelconque des revendications précédentes, dans lequel le système de pompe à chaleur (3, 6, 7, 8) est arrêté lors de la survenue de bulles de gaz au-dessus de conditions limites pouvant être prédéfinies.

5. Procédé selon l'une quelconque des revendications précédentes, dans lequel un second ventilateur automatique (11) est agencé en amont de l'échangeur de chaleur (3) pour éviter la survenue de bulles d'air tournant dans le premier circuit au niveau du capteur à ultrasons (9).

6. Dispositif comprenant au moins un capteur à ultrasons et une unité d'évaluation pour la détection sûre de la présence de bulles de gaz d'un réfrigérant combustible gazeux d'un système de pompe à chaleur pour le chauffage ou le refroidissement de bâtiments résidentiels et/ou pour la préparation d'eau chaude dans un liquide, à savoir sensiblement de l'eau ou de la saumure, d'un premier circuit (1) fermé du système de pompe à chaleur, dans lequel le premier circuit (1) présente un échangeur de chaleur (3) pour l'échange de chaleur avec un second circuit (2) qui fonctionne avec le réfrigérant, dans lequel l'au moins un capteur à ultrasons (9) est en outre agencé dans le premier circuit (1) en aval mais en hauteur au-dessus de l'échangeur de chaleur (3) et un ventilateur automatique (10) est agencé plus en aval et en hauteur encore plus haut et dans lequel le capteur à ultrasons (9) est relié à l'unité d'évaluation (12) pour la détection de bulles à l'aide de signaux à ultrasons qui est adaptée de sorte qu'elle réalise les étapes du procédé selon les revendications 1 à 5.

7. Dispositif selon la revendication 6, dans lequel le capteur à ultrasons (9) est également formé comme débitmètre en liaison avec l'unité d'évaluation (12).

8. Dispositif selon l'une quelconque des revendications 6 ou 7, dans lequel le premier circuit fermé (1) présente un second ventilateur (11) automatique en amont de l'échangeur de chaleur (3).

9. Dispositif selon l'une quelconque des revendications 6 à 8, dans lequel le liquide dans le premier circuit fermé (1) est sensiblement de l'eau, le réfrigérant dans le second circuit fermé (2) est sensiblement un réfrigérant combustible.

10. Produit de programme informatique comprenant des ordres qui font que le dispositif selon la revendication 6 exécute le procédé selon la revendication 1.
